# EUROPÄISCHE PATENTSCHRIFT

(11) **EP 3 613 126 B1**
(45) Veröffentlichungstag und Bekanntmachung des Hinweises auf die Patenterteilung: **08.10.2025**
(21) Anmeldenummer: 18718152.4
(22) Anmeldetag: 17.04.2018
(51) Int. Cl.: H02J 50/80, H02J 50/12, H02J 7/02

(54) **VORRICHTUNG ZUR KONTAKTLOSEN INDUKTIVEN ENERGIEÜBERTRAGUNG UND VERFAHREN ZUM BETREIBEN DER VORRICHTUNG**
DEVICE FOR CONTACTLESS INDUCTIVE ENERGY TRANSMISSION AND METHOD FOR OPERATING THE DEVICE
DISPOSITIF POUR LA TRANSMISSION INDUCTIVE D'ÉNERGIE SANS CONTACT ET PROCÉDÉ POUR LE FONCTIONNEMENT DU DISPOSITIF

(30) Priorität: 19.04.2017 DE 102017108302
(43) Veröffentlichungstag der Anmeldung: 26.02.2020
(73) Patentinhaber: Weidmüller Interface GmbH & Co. KG, 32758 Detmold (DE)
(72) Erfinder: GRÜNBERG, Olaf, 32825 Blomberg (DE); LANGE, Fabian, 32758 Detmold (DE)
(74) Vertreter: Specht, Peter
(86) Internationale Anmeldenummer: PCT/EP2018/059708
(87) Internationale Veröffentlichungsnummer: WO 2018/192893

(56) Entgegenhaltungen:
- EP-A1- 2 083 407
- EP-A1- 3 131 180
- EP-A2- 2 564 403
- US-A1- 2014 239 733

## Beschreibung

Die Erfindung betrifft eine Vorrichtung zur kontaktlosen Energieübertragung von einem Primärteil auf ein Sekundärteil, die jeweils mindestens eine Spule aufweisen, die induktiv über einen Luftspalt hinweg miteinander koppelbar sind. Die Erfindung betrifft weiterhin ein Verfahren zum Betreiben einer solchen Vorrichtung.

Gegenüber Steckverbindern, bei denen eine Energieübertragung über mechanisch zu verbindende bzw. zu trennende Kontaktelemente erfolgt, besitzen Vorrichtungen zur kontaktlosen Energieübertragung Vorteile bezüglich eines Verschleißes durch eine hohe Zahl von Steckzyklen oder starken Vibrationen. Zudem ist ein Kontaktabbrand bei einem Ein- oder Ausstecken unter elektrischer Last verhindert. Auch die Gefahr des Ausbildens von Lichtbögen beim Trennen von Steckverbindern mit einer hohen Strombelastung ist bei kontaktlosen Vorrichtungen zur Energieübertragung nicht gegeben. Schließlich liegt bei der kontaktlosen Übertragung von Energie eine galvanische Trennung zwischen dem Primärteil und dem Sekundärteil vor, die beispielsweise beim Einsatz im medizinischen Bereich gefordert sein kann. Der Verzicht auf mechanisch ineinandergreifende Kontakte ermöglicht es zudem, die Vorrichtung mit möglichst glatten Oberflächen zu versehen, was sie für Anwendungen mit erhöhten Anforderungen an Sauberkeit/Hygiene, beispielsweise im Lebensmittelbereich, prädestiniert.

Ihre hohe Verschleißfestigkeit macht die kontaktlose induktive Energieübertragung auch im Automatisierungsbereich interessant, beispielsweise zur Übertragung von Energie an ein Wechselwerkzeug eines Roboters.

Die EP 3 131 180 A offenbart ein drahtloses Energiesendeverfahren für einen drahtlosen Energiesender, der einen Haupt-Halbbrückenwechselrichter, der mit einem Ende einer Mehrzahl von Wickelzellen verbunden ist, und eine Mehrzahl von Neben-Halbbrückenwechselrichtern umfasst, die mit den anderen Enden der Wickelzellen verbunden ist.

Die US 2014/0239733 A1 offenbart ein induktives Ladesystem. Die Offenbarung betrifft ferner Verfahren zum Steuern des induktiven Ladens. Das induktive Ladesystem dient zur kontaktlosen induktiven Energieübertragung von einem Primärteil zu einem Sekundärteil, die jeweils mindestens eine Spule aufweisen, die induktiv über einen Luftspalt hinweg miteinander koppelbar sind. Dabei weisen das Primärteil und/oder das Sekundärteil wenigstens eine Zustandserfassungseinrichtung zur Erfassung eines oder mehrerer Zustandsparameter des Primärteils und/oder des Sekundärteils auf und die wenigstens eine Zustandserfassungseinrichtung weist eine Parametrisierungseinheit aufweist, mit welcher einzelne oder mehrere der Zustandsparameter eingestellt und/oder geändert werden. Die Vorrichtung ist mit wenigstens einen Endgerät zur Dateneingabe und Datenausgabe, d.h. Datenanzeige, gekoppelt ist und das wenigstens eine Endgerät weist eine Bildschirmoberfläche aufweist, die zur visuellen Anzeige von einem oder mehreren der Zustandsparameter und zur Einstellung oder Änderung von Informationen ausgelegt ist.

Die EP 2 083 407 A1 betrifft eine Vorrichtung zur kontaktlosen Energie- und Datenübertragung mit einer Primäreinheit, welche eine Primärinduktivität aufweist, und einer Sekundäreinheit, welche eine Sekundärinduktivität aufweist. Hierbei sind die Primäreinheit und die Sekundäreinheit zumindest zeitweilig relativ zueinander so positioniert, dass zwischen der Primärinduktivität und der Sekundärinduktivität eine transformatori-sche Kopplungsstrecke ausgebildet wird. Des Weiteren ist die Primäreinheit zur kontaktlosen Übertragung von Energie an die Sekundäreinheit eingerichtet und die Se- kundäreinheit zum Versorgen von Endgeräten, welche an ihr angeschlossen sind, ausgelegt. Die Primäreinheit weist ferner Mittel zum Unterbrechen der Energieübertragung über die transformatorische Kopplungsstrecke in Energiepausen auf und die Sekundäreinheit Mittel zum Detektieren der Energiepausen. Weiterhin weist die Sekundäreinheit Mittel zum Übertragen von Daten in den Energiepausen auf und/oder die Primäreinheit weist Mittel zum Übertragen von Daten an die Sekundäreinheit auf. Die Erfindung betrifft außerdem ein Verfahren zur kontaktlosen Ener-gie- und Datenübertragung.

Die WO 2013/087676 A2 beschreibt eine Vorrichtung zur kontaktlosen induktiven Energieübertragung von einem Primärteil zu einem Sekundärteil, die eine mechanische Steckvorrichtung zur Energieübertragung beispielsweise an ein Wechselwerkzeug eines Roboters ersetzen kann. Primär- und Sekundärteil weisen jeweils mindestens eine Spule auf, die induktiv miteinander koppelbar sind und die jeweils mit einem Ferritkern zusammenwirken. Der Ferritkern erhöht den magnetischen Fluss durch seine Permeabilität derart, dass auch bei kleinen Baugrößen der Vorrichtung und kleinen Übertragungsflächen hohe elektrische Leistungen übertragen werden können.

Eine Energieübertragung ist durch den hohen magnetischen Fluss dabei auch dann bereits möglich, wenn das Primär- und das Sekundärteil sich (noch) nicht in einer Position befinden, in der der Abstand zwischen ihnen minimal ist, sondern wenn ein Spalt zwischen ihnen besteht. Ebenso kann eine Energieübertragung auch bei einem gewissen seitlichen (lateralen) Versatz von Primär- und Sekundärteil erfolgen, also wenn sich die Spulen von Primär- und das Sekundärteil nicht auf einer gemeinsamen Achse befinden.

Zum Stand der Technik sei ergänzend auch die DE 10 2015 113 723 A1 genannt, welche ebenfalls eine Vorrichtung nach dem Oberbegriff des Anspruchs 1 offenbart, wobei über eine Datenverbindung auch Parametrisierungsdaten für an die Energie-übertragungsvorrichtung angeschlossene Messgeräte und Sensoren übertragbar sind.

Zum technologischen Hintergrund sei ferner die EP 2 564 403 A2 genannt, nach welcher Parameter im Betrieb der ansonsten gattungsgemäßen Vorrichtung von dieser selbst überwacht und ggf. geändert werden.

Es ist eine Aufgabe der vorliegenden Erfindung, die Einsatzmöglichkeiten einer derartigen Vorrichtung zur kontaktlosen Energieübertragung insbesondere zur Nutzung im Automatisierungsbereich zu erweitern.

Diese Aufgabe wird durch eine Vorrichtung mit den Merkmalen des unabhängigen Anspruchs 1 gelöst.

Vorteilhafte Ausgestaltungen und Weiterbildungen der Vorrichtung und des Betriebsverfahrens sind in den abhängigen Ansprüchen angegeben.

Derart wird ein einmaliges oder vorzugsweise wiederholtes, dauerhaftes Erfassen von einem oder vorzugsweise mehreren Parametern der Vorrichtung zur kontaktlosen Energieübertragung realisiert, was die Steuerung und Überwachung dieser Vorrichtung deutlich vereinfacht. Vorzugsweise erfolgt dabei mit einer Auswertungseinrichtung ein Auswerten der Daten, was es ermöglicht, Warnsignale zu erzeugen, sobald das aktuelle Verhalten der Vorrichtung von einem vorgegebenen Sollverhalten abweicht.

Es ist vorteilhaft möglich, nicht nur einzelne oder mehrere der Zustandsparameter oder mit ihnen zusammenhängende Werte wie Grenzwerte im Betrieb zu erfassen sondern diese(n) mit dem Endgerät auch einzustellen und/oder zu ändern, d.h. eine Parametrisierung vorzunehmen. Dazu wird die Zustandserfassungseinrichtung vorteilhaft um eine Einstellfunktion bzw. um eine Parametrisierungseinheit erweitert.

Es erfolgt auch ein Anzeigen von einem oder mehreren Zustandsparametern insbesondere auf einem Display des Endgerätes.

Die Erfindung betrifft auch ein Steuerungssystem mit wenigstens einem Endgerät, einem Steuergerät, wenigstens einem Feldgerät und wenigstens einer Vorrichtung nach einem der auf diese bezogenen Ansprüche.

Es kann nach einer bevorzugten Weiterbildung vorgesehen sein, dass die Zustandserfassungseinrichtung des Primärteils mit einer Datenübertragungsvorrichtung des Primärteils gekoppelt ist und/oder dass die Zustandserfassungseinrichtung des Sekundärteils mit einer Datenübertragungsvorrichtung des Sekundärteils gekoppelt ist, so dass die erfassten Daten intern der Vorrichtung oder extern der Vorrichtung weitergeleitet werden können.

Es ist zweckmäßig, wenn die Zustandserfassungseinrichtung des Primärteils mit einem oder mehreren Sensoren zur Erfassung von einem oder mehreren Zustandsparametern des Primärteils, insbesondere der Primärspule gekoppelt ist und/oder wenn die Zustandserfassungseinrichtung des Sekundärteils mit einem oder mehreren Sensoren zur Erfassung von einem oder mehreren Zustandsparametern an dem Sekundärteil, insbesondere an der Sekundärspule gekoppelt ist.

Es kann ferner nach einer anderen derartigen Variante vorgesehen sein, dass die Datenübertragungsvorrichtung des Primärteils ferner zur Übertragung von Daten über wenigstens einen Datenbus zu der Datenübertragungsvorrichtung des Sekundärteils ausgelegt ist.

Derart ergeben sich vorteilhafte Optionen.

So können zur Optimierung des Betriebes der Vorrichtung bzw. des Systems interne Größen -wie insbesondere Strom/Ströme, Spannung/Spannungen, Temperatur/Temperaturen und/oder Wirkungsgrad/Wirkungsgrade gemessen bzw. bestimmt werden. Durch eine Parametrisierung kann ein Nutzer die Vorrichtung bzw. das Verfahren parametrisieren und dadurch insbesondere jeweilige Grenzwerte insbesondere für diese Größen festlegen und einstellen. Die Grenzwerte können durch eine kombinatorische Auswertung der Sensordaten festgelegt werden.

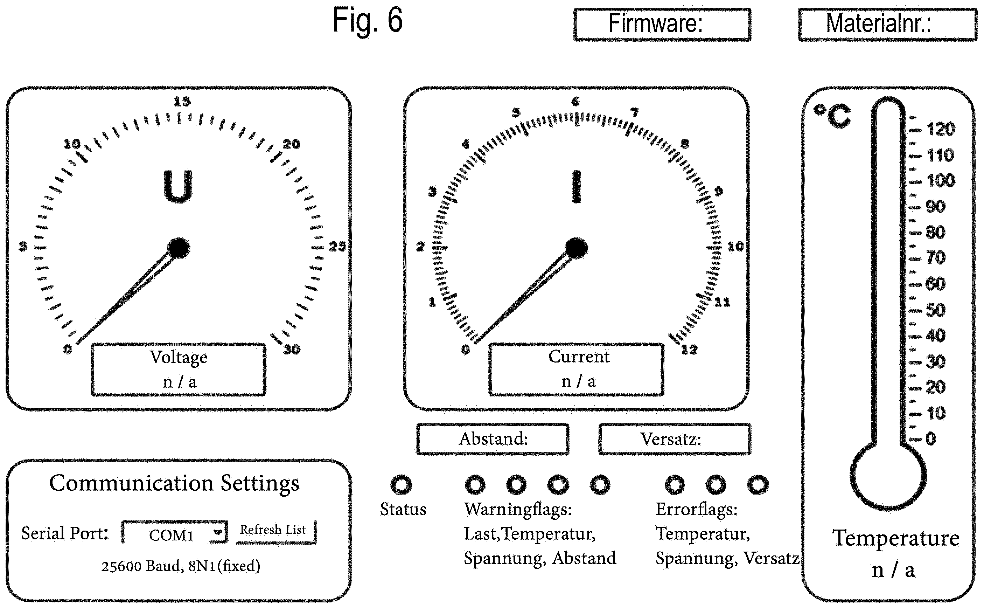

Wird ein solcher durch Parametrisierung gesetzter Grenzwert überschritten bzw. ein kritischer Zustand erreicht, gibt das System eine erste Warnung aus (siehe auch Fig. 6 - Warningflags). Bleibt das System bzw. die Vorrichtung weiterhin im kritischen Zustand, kann beispielsweise nach vorgegebener Zeit eine weitere Warnung ausgegeben werden. Anstelle einer nochmals dritten Warnung kann vorgesehen sein, dass sich das System abschaltet Diese Vorgehensweise stellt einen erheblichen Schutz der Vorrichtung/des Systems dar. Zudem wird die Vorrichtung bzw. wird das System überwacht (beispielsweise der Luftspalt) und zum anderen wird zeitgleich durch das Überwachen der internen Größen dafür gesorgt, dass das System optimal betrieben wird. Damit ist ebenfalls implizit die Erhöhung der Verfügbarkeit der Anlage in der das System verbaut ist verbunden.

Optional können nach einer Variante der Erfindung vorteilhaft selbstständige oder gesteuerte, mit und ohne parametrisierter Ankündigung, funktionale Handlungen wie z.B. eine Abschaltung der Übertragung und/oder eine Leistungsreduzierung oder dgl. durchgeführt werden.

Es kann weiter vorteilhaft vorgesehen sein, dass die Datenübertragungsvorrichtung des Sekundärteils zur Übertragung von Daten über wenigstens einen Datenbus oder mehrere Datenbusse zu wenigstens einem Feldgerät ausgelegt ist. Diese Option zum Datenaustausch mit den Feldgeräten erweitert wiederum die Einsatzmöglichkeiten der Vorrichtung zur kontaktlosen Energieübertragung.

Nach einer weiteren Variante ist vorgesehen, dass das Primärteil und das Sekundärteil jeweils eine Datenübertragungseinheit zur Übertragung von Daten über den Luftspalt aufweisen. Insbesondere bei einem Einsatz im Automatisierungsbereich im industriellen Umfeld wird neben Versorgungsstrom häufig auch eine Datenanbindung benötigt, z.B. bei einem Austauschwerkzeug eines Roboterarms. Die Übertragung von Strom und Daten gemeinsam durch eine einzige Vorrichtung mit nur einem Primär und einem Sekundärteil vereinfacht die Einrichtung und Wartung der Anordnung. In einer vorteilhaften Ausgestaltung der Vorrichtung erfolgt die Übertragung der Daten über den Luftspalt optisch. Damit ist ein Datenübertragungskanal gewählt, der in keinerlei Störsituation mit der induktiven Energieübertragung steht. Bevorzugt sind die die Datenübertragungseinheiten mittig und konzentrisch zu den Spulen angeordnet. Der sich in der Mitte der Spulen befindende Raum kann so genutzt werden, wodurch die Datenübertragungseinheiten in Primär- bzw. Sekundärteil integriert werden können, ohne dass sich deren Abmessungen im Vergleich zu Systemen, die nur der Energieübertragung dienen, vergrößern. In einer weiteren vorteilhaften Ausgestaltung der Vorrichtung weisen die Datenübertragungseinheiten jeweils mindestens ein Sendeelement und mindestens ein Empfangselement auf. Bevorzugt ist das Sendeelement zentral angeordnet und von mehreren Empfangselementen umgeben.

Die Erfindung wird nachfolgend anhand von Ausführungsbeispielen mithilfe von Figuren näher erläutert. Die Figuren zeigen:
- Fig. 1: eine Schnittansicht einer ersten schematisch dargestellten Vorrichtung zur kontaktlosen Energieübertragung;
- Fig. 2: eine weitere Schnittansicht der in Figur 1 dargestellten Vorrichtung;
- Fig. 3: eine schematische Ansicht eines Steuerungssystems mit einer Variante einer Vorrichtung zur kontaktlosen Energieübertragung;
- Fig. 4: eine schematische Darstellung der Vorrichtung zur kontaktlosen Energieübertragung aus Fig. 3;
- Fig. 5: eine schematische Ansicht einer zweiten Variante einer Vorrichtung zur kontaktlosen Energieübertragung für das Steuerungssystem der Fig.3;
- Fig. 6: eine schematische Darstellung einer ersten Bildschirmoberfläche zur Anzeige von Zustandsinformationen der Vorrichtung aus Fig. 4 oder 5; und
- Fig. 7: eine schematische Darstellung einer Variante eines Bildschirmoberfläche zur Anzeige von Zustandsinformationen der Vorrichtung aus Fig. 4 oder 5.

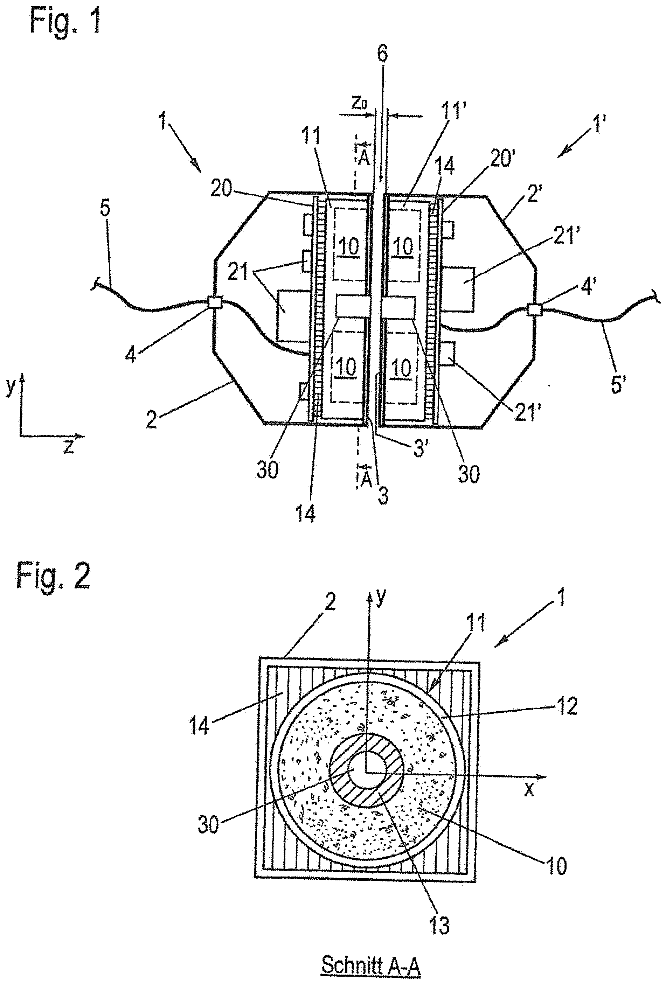

Figur 1 zeigt ein schematisches Schnittbild einer ersten Vorrichtung zur kontaktlosen Energieübertragung von einem Primärteil 1 zu einem Sekundärteil 1'. In Figur 2 ist das Primärteil 1 in einem Schnitt entlang der in Figur 1 dargestellten Schnittlinie A-A wiedergegeben.

Elemente, die dem Primärteil 1 zugeordnet sind, im Folgenden auch primärseitige Elemente genannt, tragen in den Figuren Bezugszeichen ohne Apostroph. Elemente, die dem Sekundärteil 1' zugeordnet sind, im Folgenden auch sekundärseitige Elemente genannt, tragen Bezugszeichen mit einem entsprechenden Apostroph.

Dabei sind primärseitige und sekundärseitige Elemente, die die gleiche oder eine vergleichbare Funktion aufweisen, mit Bezugszeichen mit denselben Zahlen versehen. Wenn im Folgenden nicht explizit auf die Primär- oder Sekundärseite verwiesen wird, werden Bezugszeichen ohne Apostroph verwendet, die sich auf beide Seiten beziehen.

Primärteil 1 und Sekundärteil 1' weisen jeweils ein Gehäuse 2 auf, das aus einem für Steckergehäuse üblichen Material wie Kunststoff, Aluminium oder Edelstahl oder dergleichen gefertigt sein kann. Die Gehäuse 2 sind halbschalenförmig ausgeführt, wobei ihre vordere Seite mit einer Frontplatte 3 verschlossen ist. Im hinteren Bereich, von der Frontplatte 3 weg weisend, ist in das Gehäuse 2 eine Kabeldurchführung 4 oder eine Steckverbindung für ein Anschlusskabel 5 eingebracht. Bevorzugt ist das Anschlusskabel 5 eine Hybridleitung, die Anschlussleitungen zur Energiezufuhr, u.a. der zu übertragenden Energie, aufweist sowie Datenleitungen. Alternativ können Energie und Daten auch in getrennten Leitungen zugeführt werden. Anstelle von fest angeordneten Leitungen können auch Steckverbinder am Gehäuse 2 angeordnet sein.

Unmittelbar hinter der Frontplatte 3 ist jeweils eine Spule 10 angeordnet, die auf einen Ferritkern 11 gewickelt ist, bzw. auf einen Spulenkörper gewickelt ist, der in den Ferritkern 11 eingelegt ist. Die Spule 10 kann mit einem einzelnen Leiter gewickelt sein. Zur Verringerung des Skin-Effekts ist allerdings eine Verwendung von mehradriger Hochfrequenzlitze bevorzugt.

Im dargestellten Ausführungsbeispiel ist der Ferritkern 11 primär- und sekundärseitig ein runder Topfkern mit einem äußeren Rand 12 und einem dazu konzentrischen inneren Dom 13. Ein solcher Kern wird auch als (zylindersymmetrischer) E-Kern bezeichnet. Dabei sind die Querschnitte des äußeren Rands 12 und des inneren Doms 13 bevorzugt näherungsweise gleich groß, um eine homogene magnetische Flussdichte unter Berücksichtigung der unterschiedlichen Streufelder im Ferritkern 11 zu erzielen. Die Verwendung von Ferritkernen mit anderer Geometrie ist ebenfalls möglich. Beispielsweise können quadratische oder rechteckige Kerne mit runden oder quadratischen bzw. rechteckigen Ferritkernen eingesetzt werden. Auch Spulen ohne Spulenkörper, z.B. mit miteinander verklebten Leitern können verwendet werden. Zur jeweiligen Frontplatte 3 hin sind die Ferritkerne 11 offen, wohingegen auf der gegenüberliegenden Seite der äußere Rand 12 und der innere Dom 13 über einen Topfboden miteinander verbunden sind. Die Spule 10 ist jeweils in den hier ringförmigen Graben zwischen dem äußeren Rand 12 und dem inneren Dom 13 eingelegt. Ein eventuell noch vorhandener Spalt zwischen dem äußeren und inneren Rand der Spule 10 und dem Ferritkern 11 kann mit einem wärmeleitenden Medium ausgefüllt sein (mit der Möglichkeit der Wärmeableitung zum Gehäuse).

Im Betrieb werden zur kontaktlosen induktiven Energieübertragung das Primärteil 1 und das Sekundärteil 1' mit ihren Frontplatten 3, 3' aufeinander zuweisend in geringem Abstand zu einander gebracht. In der Figur 1 ist dieser Abstand, der einen Luftspalt 6 bildet, als Übertragungsabstand z0 eingezeichnet.

Die Größe eines zulässigen Übertragungsabstands z0 liegt im Bereich von 0 bis einigen Millimetern oder Zentimetern, abhängig von der Größe, insbesondere dem Durchmesser der Spulen 10 bzw. Ferritkerne 11. Die Richtung entlang der Achse der primärseitigen Spule 10 wird nachfolgend als z-Richtung, die zugeordnete Achse als z-Achse bezeichnet. Senkrecht dazu verlaufen in der Ebene der Frontplatte 3 die x- und y-Richtungen bzw. Achsen.

Im Betrieb wird die primärseitige Spule 10, nachfolgend auch als Primärspule 10 bezeichnet, mit einem Wechselstrom beaufschlagt. Bevorzugt ist dabei aus der Primärspule 10 und einem Resonanzkondensator ein Resonanzkreis gebildet, dessen Frequenz im Bereich von einigen Kilohertz (kHz) bis einigen hundert kHz liegen, wobei eine Frequenz im Bereich von einigen zehn kHz besonders bevorzugt ist. Der Wechselstrom, mit der die Primärspule 10 beaufschlagt wird, wird von einem Wechselrichter bereitgestellt. Im Wechselrichter kann zur Erzeugung der Wechselspannung dabei beispielsweise ein Pulsweitenmodulationsverfahren (PWM-Verfahren) eingesetzt werden. Der Wechselrichter befindet sich zusammen mit Überwachungs- und Steuereinrichtungen auf einer Platine 20 innerhalb des Gehäuses 2 des Primärteils 1. In der Figur sind beispielhaft auf der Platine 20 elektronische Komponenten 21 eingezeichnet.

Zum Schutze des Wechselrichters vor einer Resonanzüberhöhung der Amplitude am Resonanzkreis, gebildet aus dem genannten Resonanzkondensator und der Primärspule 10, wird der Resonanzkreis leicht überresonant, also bei Frequenzen oberhalb der Resonanzfrequenz, betrieben.

Bei einer Energieübertragung bedingt die magnetische Kopplung zwischen der Primärspule 10 und sekundärseitigen Spule 10', nachfolgend Sekundärspule 10' genannt, die durch die vorhandenen Ferritkerne 11 und 11' besonders effizient ist. In der Sekundärspule 10' wird eine Spannung induziert, die nach Gleichrichtung, Spannungswandlung - und ggf. Spannungsstabilisierung - als Ausgangsspannung am Anschlusskabel 5' zur Abgabe der übertragenen Energie bereitsteht. Die elektronischen Komponenten auf der Sekundärseite sind ebenfalls auf einer Platine 20' angeordnet, wobei hier wiederum beispielhaft einzelne elektronische Komponenten 21' eingezeichnet sind. Vorteilhaft kann die Sekundärspule einen Mittelabgriff aufweisen, so dass ein Synchrongleichrichter verwendet werden kann.

Bei dem dargestellten Ausführungsbeispiel sind keine ineinandergreifenden Führungs- oder Positionierungselemente vorgesehen, die das Primärteil 1 und das Sekundärteil 1' bei einem Zusammenfügen lateral zueinander ausrichten würden. Durch das Fehlen solcher Elemente können das Primärteil 1 und das Sekundärteil 1' auch durch eine Lateralbewegung, das heißt eine Bewegung in x- und/oder y-Richtung in die Betriebsposition gebracht werden bzw. voneinander getrennt werden. Dieses erweist sich gerade im Automatisierungsbereich als besonders vorteilhaft, da eine zusätzliche axiale Bewegung von Primär- und Sekundärteil 1, 1' aufeinander zu zum Etablieren oder Trennen einer Verbindung nicht erforderlich ist. Je nach geplantem Anwendungszweck können in alternativen Ausgestaltungen derartige Führungs- oder Positionierungselemente jedoch auch vorgesehen sein.

Die Ferritkerne 11, 11' erlauben eine hohe magnetische Flussdichte, durch die eine effiziente Energieübertragung auch bei kleinem Spulenvolumen möglich ist. Die Übertragung ist dabei relativ tolerant gegenüber einer lateralen Verschiebung des Primärteils 1 und des Sekundärteils 1' gegeneinander. Dieses ist beispielsweise im Automatisierungsbereich von hohem Vorteil, da auf eine hohe Positioniergenauigkeit zur Etablierung einer konventionellen kontaktbehafteten Steckverbindung verzichtet werden kann.

Zur Datenübertragung ist die Vorrichtung mit einer Datenübertragungsvorrichtung 50 versehen. Diese kann eine oder mehrere Datenübertragungseinheiten 30, 30' aufweisen, um über eine oder mehrere Datenschnittstellen mit einem und/oder mehreren Datenbussen innerhalb der Vorrichtung und/oder zu externen Komponenten außerhalb der Vorrichtung Daten zu übertragen oder von diesen Komponenten Daten zu empfangen.

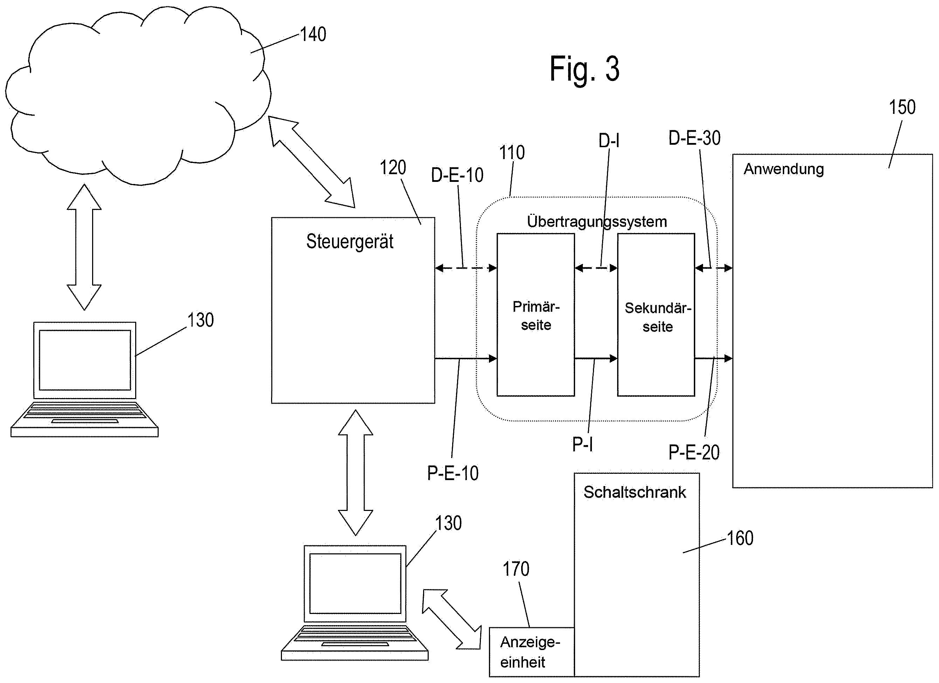

Fig. 3 zeigt eine schematische Ansicht eines Steuerungssystems 100 mit einer Variante einer Vorrichtung 110 zur kontaktlosen Energieübertragung (hier Übertragungssystem genannt). Diese Vorrichtung 110 weist wiederum ein Primärteil 1 (primary side 1) und ein Sekundärteil 1' (secondary side) auf, die hier rein zur Veranschaulichung ihrer funktionalen Zusammengehörigkeit von einem in den Eckbereichen abgerundeten Rechteck umgeben sind.

Das Steuerungssystem 100 weist eine Reihe von Bussen auf. Ein Bus ist in diesem Sinne ein Untersystem des Steuerungssystems, das uni- oder bidirektional Daten oder Energie zwischen Geräten des Steuerungssystems mit einem Prozessor, insbesondere einer CPU, oder zwischen anderen Bestandteilen einzelner Geräte des Steuerungssystems 100 überträgt. Die Vorrichtung 110 zur kontaktlosen Energieübertragung ist in diesem Sinne eines der Geräte des Steuerungssystems. Die Busse des Steuerungssystems 100 können parallel, als auch bit-seriell ausgelegt sein. Ihre Architektur kann linienförmig und/oder sternförmig sein. Es gibt zudem externe Busse des Steuerungsystems 100. Dies sind im Sinne dieser Anmeldung sämtliche Busse außerhalb der Vorrichtung 110 zur kontaktlosen Energieübertragung, welche diese mit zur Vorrichtung 110 externen Geräten des Steuerungssystems 100 verbinden. Es gibt ferner interne Busse des Steuerungssystems 100. Dies sind im Sinne dieser Anmeldung Busse, mit denen innerhalb der Vorrichtung 110 Energie und/oder Daten bzw. Signale übertragen werden. Die Vorrichtung 110 weist wenigstens einen (hier nicht zu erkennenden) Mikrocontroller auf oder einen anderen Prozessor, insbesondere eine CPU.

Geräte des Steuerungssystems 100 sind hier ferner wenigstens ein Steuergerät 120, insbesondere ein Gateway, wenigstens ein Endgerät (Kommunikationsendgeräte 130), wenigstens eine Cloud 140 (im Sinne einer Computereinrichtung, insbesondere einer Speichereinrichtung mit eigener CPU-Fähigkeit, die über das Internet erreichbar ist) und wenigstens ein Feldgerät 150. Als Option ist ein Schaltschrank 160 mit einer Anzeigeeinheit 170 dargestellt.

Zur Veranschaulichung der kontaktlosen internen Energieübertragung zwischen dem Primärteil 1 und dem Sekundärteil 1' mittels eines internen Energiebusses dient ein Pfeil P-I. Zur Veranschaulichung einer kabellosen bzw. kontaktlosen internen Datenübertragung zwischen dem Primärteil 1 und dem Sekundärteil 1' mittels eines internen Datenbusses dient ferner ein Pfeil D-I. Zur Realisierung dieser Datenverbindung weisen das Primärteil 1 und das Sekundärteil 1' je eine Datenübertragungseinheiten 30, 30' auf, die einen Teil der Datenübertragungsvorrichtung der Vorrichtung 100 bilden (Fig. 1, 3, 4).

Das Primärteil 1 ist ferner über wenigstens einen externen Energiebus P-E10 und wenigstens einen ersten externen Datenbus D-E-10 und vorzugsweise (aber nicht zwingend) über einen zweiten externen Datenbus D-E-11 zur leitungsgebundenen oder kabellosen Datenübertragung mit dem Steuergerät 120 - beispielsweise einem Gateway - verbunden. Das Steuergerät 120 bzw. das Gateway kann wiederum zumindest über den ersten externen Datenbus (dickere, nicht gefüllt gezeichnete Pfeile) oder einen anderes ausgelegten Datenbus, der beispielsweise ein anderes Übertragungsprotokoll verwenden kann, mit dem wenigstens einen Endgerät 130 zur Datenausgabe, insbesondere -anzeige, und zur Dateneingabe, verbunden sein, um Zustandsdaten des Steuerungssystems, insbesondere der Vorrichtung zur kontaktlosen Energieübertragung, anzuzeigen und/oder um Steuerungsbefehle einzugeben.

Das Steuergerät 120 kann auch mit mehreren der Endgeräte 130 verbunden sein. Hier sind zwei Endgeräte 130 vorgesehen. Dabei ist eines der Endgeräte 130 direkt über den ersten externen Datenbus mit dem Steuergerät 120 verbunden und das Endgerät 130 andere indirekt - hier über eine Cloud 140 - und den ersten externen Datenbus mit dem Steuergerät 120 verbunden. Zur Datenübertragung auf dem wenigstens einen externen Datenbus D-E-10 können verschiedenste physikalisch und datentechnisch ausgelegte Systeme benutzt werden, so Feldbussysteme verschiedener Art wie Profibus oder Ethernet. Das Endgerät 130 ist hier mit einem zweiten Endgerät gekoppelt, das als eine Anzeigeeinheit 170 an einem Schaltschrank 160 ausgelegt ist (siehe Fig 3). Derart kann eine Anzeige direkt an oder in einem Schaltschrank erfolgen.

Das Sekundärteil 1' ist über einen zweiten externen Energiebus P-E-20 ferner mit einem oder mehreren Feldgeräten 150 verbunden, beispielsweise mit einem oder mehreren Antrieben, Initiatoren oder Sensoren oder dgl., um diese mit Energie zu versorgen.

Das Sekundärteil 1' ist hier zudem ebenfalls über einen dritten externen Datenbus D-E-30 mit wenigstens einem oder mehreren der Feldgeräte 150 verbunden, um diesen Steuerungsdaten oder -signale zu übermitteln oder um von diesen Steuerungsdaten oder -signale zu empfangen. Der zweite externe Datenbus D-E-30, insbesondere dessen Übertragungsprotokoll, kann nach Art des ersten externen Datenbusses ausgelegt sein.

Derart ist eine Fernsteuerung der Vorrichtung 110 zur kontaktlosen Energieübertragung und vorzugsweise auch des oder der an das Sekundärteil 1' der Vorrichtung 110 zur kontaktlosen Energieübertragung angeschlossenen Feldgeräte(s) 150 möglich.

Es ist zudem auch eine Fernüberwachung und -diagnose der Vorrichtung 110 zur kontaktlosen Energieübertragung möglich. Vorzugsweise ist zudem auch eine Fernüberwachung und -diagnose der an das Sekundärteil 1' der Vorrichtung zur kontaktlosen Energieübertragung angeschlossenen Feldgeräte 150 möglich.

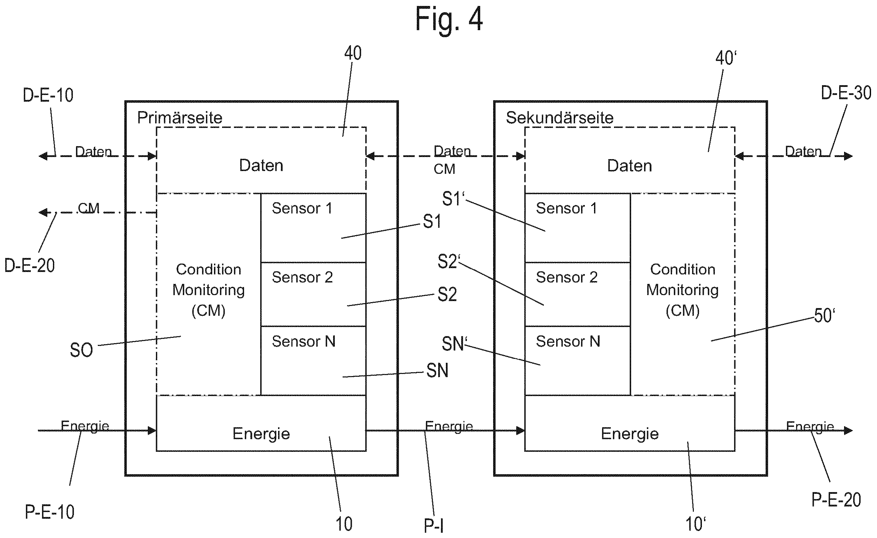

Fig. 4 zeigt eine schematische Darstellung einer Vorrichtung 110 zur kontaktlosen Energieübertragung nach Art der Fig. 1.

Dargestellt sind wiederum die Energieübertragungswege bzw. -busse P-E-1, P-I und P-E-2 und die Datenübertragungswege bzw. Datenbusse D-E-10, der optionale zweite Datenbus D-E-20 und der optionale dritte externe Datenbus D-E-30.

Zur Energieübertragung weist das Primärteil 1 die weiter oben beschriebenen Bauteile auf, insbesondere die Primärspule 10. Zur Datenübertragung weist zudem zumindest das Primärteil 1 eine Datenübertragungsvorrichtung 40 auf. Diese Datenübertragungsvorrichtung 40 ist hier mit dem ersten externen Datenbus D-E-10 gekoppelt. Der erste Datenbus kann zur parallelen Datenübertragung ausgelegt sein. Sie ist ferner mit einem zweiten externen Datenbus D-E-20 gekoppelt. Dieser zweite externe Datenbus D-E-20 kann ein Datenbus zur seriellen Datenübertragung sein, z.B. RS 232 oder RS 485.

Der zweite externe Datenbus D-E-20 ist eine vorteilhafte Option, die aber nicht zwingend umgesetzt werden muss. Der zweite externe Datenbus D-E-20 ist vorzugsweise mit dem Steuergerät 120 gekoppelt.

Das Primärteil 4 weist eine Zustandserfassungseinrichtung 50 (Condition Monitoring) auf. An die Zustandserfassungsvorrichtung 50 sind einer oder mehrere Sensoren angeschlossen (Sensoren S1, S2, ..., SN).

Die Zustandserfassungsvorrichtung 50 dient derart zur Erfassung eines oder mehrerer Zustandsparameter der Vorrichtung zur kontaktlosen Energieübertragung, insbesondere des Primärteils 1, insbesondere im Betrieb der Vorrichtung 110 zur kontaktlosen Energieübertragung während der Energieübertragung.

Die Zustandserfassungsvorrichtung 50 ist mit der Datenübertragungsvorrichtung 40 des Primärteils 1 gekoppelt. Diese kann die von der Zustandserfassungsvorrichtung 50 des Primärteils 1 ermittelten Zustandsparameter den einen Datenbus oder über einen der Datenbusse - hier den zweiten externen Datenbus D-E-20 - zu dem Steuergerät 120 weiterleiten, das die Informationen von hier über einen Datenbus wie beispielsweise über das Internet oder dgl. an das bzw. eines der Endgeräte 130 übermitteln kann. Es ist vorteilhaft, dass zur Übermittlung der ermittelten Zustandsparameter ein separater Datenbus, hier beispielhaft ein serieller Datenbus, verwendet wird. Dies ist aber nicht zwingend erforderlich.

Optional ist nach einer vorteilhaften - aber wiederum nicht zwingenden Weiterbildung vorgesehen, dass auch das Sekundärteil 1' eine Datenübertragungsvorrichtung 40' aufweist. Dies ist vorzugsweise eine Datenübertragungsvorrichtung 40' mit einer ersten Datenübertragungseinheit 30' zur internen Datenübertragung über den internen Bus D-I zwischen dem Primärteil 1 und dem Sekundärteil 1'. Zudem kann die Datenübertragungsvorrichtung 40' zur Weiterleitung und zum Empfang von Daten über den hier dritten externen Bus D-E-30 zu den Feldgeräten 150 ausgelegt sein. Derart sind diesen Daten übermittelbar und es sind Daten von den Feldgeräten 150 zu dem Primärteil 1 und von hier zum Steuergerät 120 und weiter über den ersten externen Datenbus bis zu den Endgeräten 130 zurück übermittelbar.

Optional - nicht aber zwingend - weist auch das Sekundärteil 1'eine Zustandserfassungseinrichtung 50' auf. An die Zustandserfassungsvorrichtung 50' sind hier wiederum einer oder mehrere Sensoren angeschlossen ( S1', S2', ..., SN'), um derart Zustandsparameter zu erfassen.

Die Zustandserfassungsvorrichtung 50' dient derart zur Erfassung eines oder mehrerer Zustandsparameter der Vorrichtung zur kontaktlosen Energieübertragung, insbesondere des Sekundärteils 1'.

Die Zustandserfassungsvorrichtung 50' ist mit der Datenübertragungsvorrichtung 40' des Sekundärteils 1' gekoppelt. Diese kann die von der Zustandserfassungsvorrichtung 50' des Sekundärteils 1' ermittelten Zustandsparameter über den internen Datenbus D-I zu dem Primärteil 1 und von dort zu dem Steuergerät 120 weiterleiten, das die Informationen von hier beispielsweise wiederum direkt oder indirekt über das Internet oder dgl. an das Endgerät 130 übermitteln kann. Dies erweitert die Zustandsüberwachung vorteilhaft um eine Option zur direkten Überwachung des Zustandes des Sekundärteils 1'.

Zustandsparameter, die derart im Primärteil 1 und/oder im Sekundärteil 1' erfasst und überwacht werden können sind insbesondere (die nachfolgende Aufzählungen sein nicht abschließend zu verstehen): Spannung und Strom, insbesondere Eingangsspannung; (effektiver) Eingangsstrom und/oder Ausgangsspannung und (effektiver) Ausgangsstrom am Primärteil 1 und/oder am Sekundärteil 1'.

Weitere Zustandsparameter, die derart erfasst und überwacht werden können sind: Effektiver Eingangsstrom; Status; Innentemperatur; Gehäusetemperatur / Oberfläche; Umgebungstemperatur am Primärteil 1 und/oder am Sekundärteil 1'.

Noch weitere Zustandsparameter, die derart erfasst und/oder überwacht werden können sind Parameter der Streufeldsensorik (Spannung in Induktivitäten), Abstand zwischen Primärteil 1 und Sekundärteil 1'; Winkel zwischen Primärteil 1 und Sekundärteil 1'; Qualität (Güte) der Eingangsspannung; Eingangsleistung; Ausgangsleistung; Wirkungsgrad; Objekterkennung FOD (Änderungen im Magnetfeld), Identifikation des Remotemoduls; Arbeitspunkt; Stammdaten der Sekundärseite bzw. des Sekundärteils 1'; Stammdaten der Primärseite bzw. des Primärteils 1.

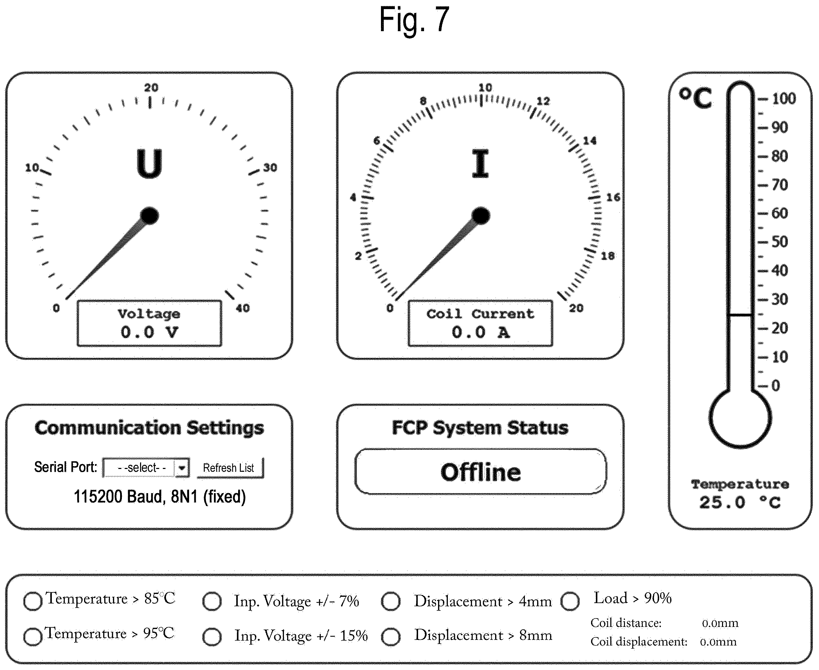

Diese Parameter sind erfassbar und/oder anzeigbar, insbesondere an einem Display des Endgerätes 130. Wird als das wenigstens eine Endgerät 130 ein PC oder ein Mobilgerät wie ein Handy oder dgl. verwendet, kann die Bildschirmoberfläche beispielhaft nach Art der Fig. 6 oder 7 ausgestaltet werden und eines oder mehrere Anzeigefelder aufweisen, die zur Anzeige der einzelnen Parameter ausgelegt sind.

Es ist optional auch vorteilhaft möglich, nicht nur einzelne oder mehrere der Parameter im Betrieb zu erfassen sondern auch einzustellen und/oder zu ändern, d.h. zu parametrisieren. Damit wird die Zustandserfassungseinrichtung 50, 50' funktional um eine Einstellfunktion bzw. um eine Parametrisierungseinheit erweitert.

Vorzugsweise erfolgt das Einstellen oder Ändern von Parametern - z.B. aktueller Vorgabewerte oder Grenzwerte - über eine Eingabe der Parameter an einer Bildschirmoberfläche des Endgerätes 130. Von dem Endgerät 130 werden diese Eingaben beispielsweise über das Internet, das Steuergerät 120 und den externen Datenbus D-E-10 der Vorrichtung 100 zur kontaktlosen Energieübertragung als Einstellwerte bzw. Einstellparameter übermittelt. Hierzu kann in einer weiteren Ausgestaltungsvariante auch direkt ein Mobilgerät mit Funkschnittstelle, wie Bluetooth oder NFC (Near Field Communication) verwendet werden zum Parametrieren und auch zur Identifikation. Es ist dazu vorteilhaft, wenn die Vorrichtung 110 zur kontaktlosen Energieübertragung mit einer vorzugsweise internetfähigen Identifikationsadresse zur Identifikation und Adressierung der Vorrichtung in dem Steuerungssystem, insbesondere über das Internet, versehen ist.

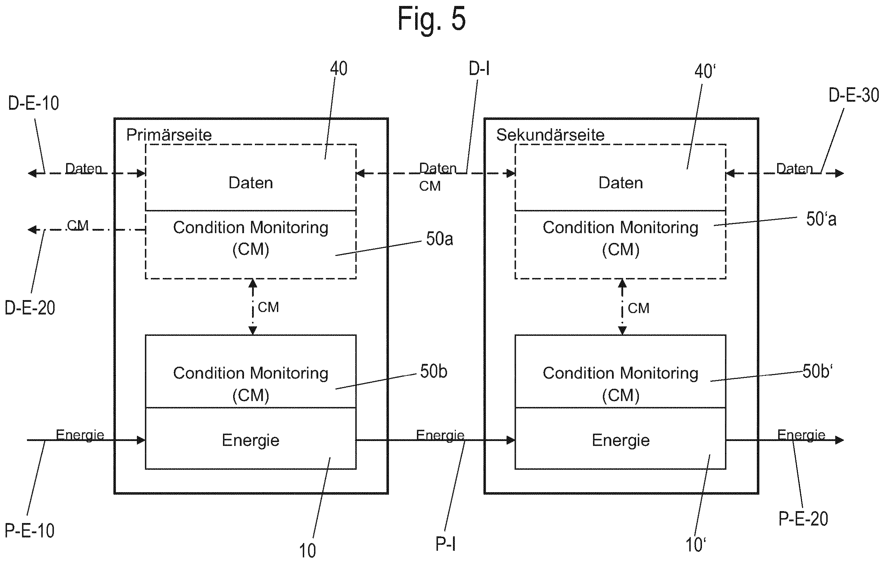

Nach Fig. 5 weisen die Zustandserfassungsvorrichtung 50 und/oder 50' des Primärteils 1 und/oder des Sekundärteils 1' jeweils mehrere Abschnitte 50a, 50b bzw. 50a' und 50b' auf, die über einen internen Datenbus CM, CM' verbunden sein können. Dieser kann im Standard i²C ausgelegt sein.

Einer der Abschnitte 50a, 50a' ist mit der jeweiligen Datenübertagungseinrichtung 40, 40' direkt gekoppelt und der andere Abschnitt 50b, 50b' ist der jeweiligen Primärspule 10 bzw. Sekundärspule 10' direkt zugeordnet, um derart jeweils direkt an diesen Bauelementen Zustandsparameter erfassen und über den jeweiligen Datenbus zum Steuergerät 120 und von dort an das oder die Endgeräte 130 weiterleiten zu können. Die Daten- und Energieübertragungseinheiten 40 bzw. 10 sowie ggf. 40' und 10' können in ein Gehäuse intergiert sein und örtlich zusammengefasst sein, was die Handhabung vereinfacht. Es ist aber auch denkbar, sie voneinander getrennt auszubilden und ggf. sogar an verschiedenen Orten anzuordnen. Die Daten- und Energieübertragungseinheiten können dann je eigene Zustandserfassungseinrichtungen 50a, 50b; 50a', 50b' aufweisen (ähnlich zu Fig. 5).

Möglichkeiten zur Visualisierung der erfassten Parameter veranschaulichen die Fig. 6 und 7. Dargestellt ist jeweils, dass Parameter an einer Bildschirmoberfläche eines Endgerätes, z.B. eines PCs, ausgegeben werden, so die Parameter Spannung oder Spulenstrom oder Temperatur (hier z.B. der Primärspule 10 des Primärteils1). Es können zudem auch Parameter der Datenübertragung angezeigt werden (Übertragungsrate und dgl.) sowie weitere Parameter, wie in Fig. 6 oder 7 jeweils aus den verwendeten Begriffen ersichtlich. Es ist auch denkbar, mehrere Parameter zu verknüpfen und die verknüpften Werte auszugeben bzw. anzuzeigen. Es ist zudem auch denkbar, Schwellen oder dgl. zu setzen, beispielsweise um ein Erreichen oder Abweichen anzuzeigen, insbesondere an einem Display des Endgerätes.

Es sind insofern vorteilhaft möglich, bei einer Abweichung von einem vorgegebenen Wert oder Wertebereich oder von einem vorgegebenen Werteverhalten (z.B. bei einer Abweichung von einem Gradienten eines gemessen Wertes) einen Fehlercode auszugeben (Errorflag). Es ist auch eine Meldung mit diversen Parametern möglich (z.B. Warning Flag bei 90% Auslastung / Temperatur nahe der Schutzabschaltung / starke Eingangsschwankungen / ständig an der oberen Abstandsgrenze). Der interne Datenbus D-I der Vorrichtung 110 ist eine sehr vorteilhafte Option und bietet die Möglichkeit zur Realisierung weitergehender Steuerungs- und Überwachungsoptionen. Der interne Datenbus D-I ist aber im Sinne der Erfindung keine bei sämtlichen erfindungsgemäßen Varianten zwingende Option. Nach Fig. 1 weisen das Primärteil 1 und das Sekundärteil 1' der Vorrichtung optional zur kontaktlosen Energieübertragung in die Datenübertragungsvorrichtungen 40 und 40' jeweils integrierte Datenübertragungseinheiten 30 bzw. 30' auf, die (digitale) Daten bidirektional zwischen dem Primärteil 1 und dem Sekundärteil 1' übertragen. Damit kann über die Vorrichtung zur kontaktlosen Energieübertragung z.B. eine Automatisierungskomponente bzw. ein Feldgerät nicht nur mit Strom, sondern auch mit Daten versorgt werden. Die Vorrichtung zur kontaktlosen Energieübertragung stellt damit kombiniert kontaktlos wichtige Schnittstellen z.B. für ein Wechselwerkzeug bereit. Die Datenübertragungseinheiten 30 bzw. 30' sind bevorzugt identisch ausgebildet, so dass die Daten bidirektional ohne Vorzugsrichtung übertragbar sind.

Die Übertragung erfolgt bevorzugt optisch mit jeweils mindestens einem Sendeelement und mindestens einem Empfangselement in jeder der Datenübertragungseinheiten 30 bzw. 30'. Angeordnet sind die Datenübertragungseinheiten 30 bzw. 30' bei dem dargestellten Ausführungsbeispiel jeweils zentral (in x- und y-Richtung) und mit einer Lichtein- bzw. -austrittsfläche möglichst in der Ebene der Abdeckplatte 3, 3'.

Eine bidirektionale Übertragung kann in einem Vollduplex-Verfahren erfolgen, beispielsweise indem Licht unterschiedlicher Wellenlängen für die beiden Übertragungsrichtungen verwendet wird. Auch bei gleicher Wellenlänge für die beiden Übertragungsrichtungen kann ein Vollduplex-Verfahren durchgeführt werden, z.B. mithilfe von unterschiedlich modulierten Signalen in den beiden Übertragungsrichtungen.

Alternativ ist eine bidirektionale Übertragung auch in einem Halbduplex-Verfahren möglich, beispielsweise indem ein Zeitmultiplex-Verfahren mit abwechselnd aufeinanderfolgenden Zeitschlitzen für die beiden Übertragungsrichtungen eingesetzt wird.

### Bezugszeichenliste

- 1: Primärteil
- 1': Sekundärteil
- 2, 2': Gehäuse
- 3, 3': Abdeckplatte
- 4, 4': Kabeldurchführung oder Steckverbindung
- 5, 5': Anschlusskabel
- 6: Luftspalt
- 10: Primärspule
- 10': Sekundärspule
- 11, 11': Ferritkern
- 12, 12': äußerer Rand
- 13, 13': innerer Dom
- 20, 20': Platine
- 21, 21': elektronische Bauelemente
- 30, 30': Datenübertragungseinheit
- 40: Datenübertragungsvorrichtung
- 50, 50': Zustandserfassungseinrichtung
- x, y, z: kartesische Koordinaten
- z0: Abstand
- 100: Steuerungssystem
- 110: Vorrichtung zur kontaktlosen Energieübertragung
- 120: Steuergerät
- 130: Endgerät
- 140: Cloud
- 150: Feldgerät
- 160: Schaltschrank
- 170: Anzeigeeinheit

- D-I: Interner Datenbus
- P-I: Interner Energiebus
- P-E-10: Erster Externer Energiebus
- P-E-20: Zweiter Externer Energiebus
- D-E-10: Erster Externer Datenbus
- D-E-10: Zweiter Externer Datenbus

- S1, S2, ..., SN: Sensoren
- S1', S2', ..., SN': Sensoren

## Patentansprüche

1. Vorrichtung zur kontaktlosen induktiven Energieübertragung von einem Primärteil (1) zu einem Sekundärteil (1'), die jeweils mindestens eine Spule (10, 10') aufweisen, die induktiv über einen Luftspalt (6) hinweg miteinander koppelbar sind, **dadurch gekennzeichnet, dass** das Primärteil (1) und/oder das Sekundärteil (1') wenigstens eine Zustandserfassungseinrichtung (50, 50') zur Erfassung eines oder mehrerer interner Größen - umfassend Strom/Ströme, Spannung/Spannungen, Temperatur/Temperaturen und/oder Wirkungsgrad/Wirkungsgrade - als Zustandsparameter des Primärteils (1) und/oder des Sekundärteils (1') aufweist/aufweisen und dass die wenigstens eine Zustandserfassungseinrichtung (50, 50') eine Parametrisierungseinheit aufweist, mit welcher einer oder mehrere Grenzwerte für einzelne oder mehrere der Zustandsparameter eingestellt und/oder geändert werden können, wobei die Datenübertragungsvorrichtung (40) des Primärteils (1) zur Übertragung von Daten über wenigstens einen Datenbus oder mehrere Datenbusse zu einem Steuergerät (Gateway 120) oder direkt zu einem Endgerät (130) ausgelegt ist, wobei die Vorrichtung ferner direkt oder über das Steuergerät (120) mit dem wenigstens einen Endgerät (130) zur Dateneingabe und Datenausgabe, d.h. Datenanzeige, gekoppelt ist und wobei das wenigstens eine Endgerät (130) eine Bildschirmoberfläche aufweist, die zur visuellen Anzeige von einem oder mehreren der Zustandsparameter und zur Einstellung oder Änderung des einen oder der mehreren Grenzwerte für einzelne oder mehrere der Zustandsparameter Strom/Ströme, Spannung/Spannungen, Temperatur/Temperaturen und/oder Wirkungsgrad/Wirkungsgrade ausgelegt ist.

2. Vorrichtung nach Anspruch 1, **dadurch gekennzeichnet, dass** die Zustandserfassungseinrichtung (50) des Primärteils (1) mit einer Datenübertragungsvorrichtung (40) des Primärteils (1) gekoppelt ist und/oder dass die Zustandserfassungseinrichtung (50') des Sekundärteils (1') mit einer Datenübertragungsvorrichtung (40') des Sekundärteils (1) gekoppelt ist.

3. Vorrichtung nach Anspruch 1 oder 2, **dadurch gekennzeichnet, dass** die Zustandserfassungseinrichtung (50) des Primärteils (1) mit einem oder mehreren Sensoren (S1, S2, ..., SN) zur Erfassung von einem oder mehreren Zustandsparametern an dem Primärteil, insbesondere an der Primärspule (10) gekoppelt ist und/oder dass die Zustandserfassungseinrichtung (50') des Sekundärteils (1') mit einem oder mehreren Sensoren (S1', S2', ..., SN') zur Erfassung von einem oder mehreren Zustandsparametern an dem Sekundärteil (1'), insbesondere an der Sekundärspule (10') gekoppelt ist.

4. Vorrichtung nach einem der vorstehenden Ansprüche, **dadurch gekennzeichnet, dass** die Datenübertragungsvorrichtung (40) des Primärteils (1) ferner zur Übertragung von Daten über wenigstens einen Datenbus zu der Datenübertragungsvorrichtung des Sekundärteils (1') ausgelegt ist.

5. Vorrichtung nach einem der vorstehenden Ansprüche, **dadurch gekennzeichnet, dass** die Datenübertragungsvorrichtung (40) des Sekundärteils (1') zur Übertragung von Daten über wenigstens einen Datenbus oder mehrere Datenbusse zu wenigstens einem Feldgerät (150) ausgelegt ist.

6. Vorrichtung nach einem der vorstehenden Ansprüche, **dadurch gekennzeichnet, dass** sie eine Identifikationsadresse zur Identifikation und Adressierung der Vorrichtung in einem Steuerungssystem aufweist.

7. Vorrichtung nach einem der vorstehenden Ansprüche, **dadurch gekennzeichnet, dass** die jeweilige Datenübertragungsvorrichtung (40, 40') des Primärteils (1) und/oder des Sekundärteils (1') zur Übertragung der ermittelten Zustandsparameter über einen separaten Datenbus ausschließlich zur Übermittlung dieser Werte ausgelegt ist.

8. Vorrichtung nach einem der vorstehenden Ansprüche, **dadurch gekennzeichnet, dass** die Datenübertragungsvorrichtungen (40, 40') zur Übertragung von Daten über den Luftspalt (6) ausgelegt sind und dass zu diesem Zweck das Primärteil (1) und das Sekundärteil (1') jeweils als die oder eine der Datenschnittstelle(n) eine Datenübertragungseinheit (30, 30') zur Übertragung von Daten über den Luftspalt (6) aufweisen.

9. Steuerungssystem mit wenigstens einem Endgerät (130), einem Steuergerät (120), wenigstens einem Feldgerät (150) und wenigstens einer Vorrichtung nach einem der vorstehenden Ansprüche.

## Claims

1. Device for contactless inductive energy transmission from a primary part (1) to a secondary part (1') that comprise in each case at least one coil (10, 10') that can be inductively coupled to each other over an air gap (6), **characterized in that** the primary part (1) and/or the secondary part (1') comprises at least one condition monitoring device (50, 50') for monitoring one or more internal variables, including current/currents, voltage/voltages, temperature/temperatures and/or efficiency/efficiencies, as condition parameters of the primary part (1) and/or the secondary part (1'), and **in that** the at least one condition monitoring device (50, 50') has a parameterization unit with which one or more limit values for individual or multiple condition parameters can be set and/or changed, wherein the data transmission device (40) of the primary part (1) is designed for transmitting data via at least one data bus or multiple data buses to a control device (gateway 120) or directly to a terminal unit (130), wherein the device is further coupled directly or via the control device (120) to the at least one terminal unit (130) for data input and data output, i.e., data display, and wherein the at least one terminal unit (130) has a screen interface which is designed for the visual display of one or more of the condition parameters and for setting or changing the one or more limit values for individual or multiple of the condition parameters current/currents, voltage/voltages, temperature/temperatures and/or efficiency/efficiencies.

2. Device according to claim 1, **characterized in that** the condition monitoring device (50) of the primary part (1) is coupled to a data transmission device (40) of the primary part (1) and/or **in that** the condition monitoring device (50') of the secondary part (1') is coupled to a data transmission device (40') of the secondary part (1').

3. Device according to claim 1 or 2, **characterized in that** the condition monitoring device (50) of the primary part (1) is coupled to one or more sensors (S1, S2, ..., SN) for monitoring one or more condition parameters on the primary part, in particular on the primary coil (10), and/or **in that** the condition monitoring device (50') of the secondary part (1') is coupled to one or more sensors (S1', S2', ..., SN') for monitoring one or more condition parameters on the secondary part (1'), in particular on the secondary coil (10').

4. Device according to one of the preceding claims, **characterized in that** the data transmission device (40) of the primary part (1) is further designed to transmit data via at least one data bus to the data transmission device of the secondary part (1').

5. Device according to one of the preceding claims, **characterized in that** the data transmission device (40) of the secondary part (1') is designed to transmit data via at least one data bus or multiple data buses to at least one field unit (150).

6. Device according to one of the preceding claims, **characterized in that** it comprises an identification address for identifying and addressing the device in a control system.

7. Device according to one of the preceding claims, **characterized in that** the respective data transmission device (40, 40') of the primary part (1) and/or the secondary part (1') is designed to transmit the condition parameters obtained via a separate data bus exclusively for the transmission of these values.

8. Device according to one of the preceding claims, **characterized in that** the data transmission devices (40, 40') are designed for transmitting data via the air gap (6) and **in that**, for this purpose, the primary part (1) and the secondary part (1') each have, as the or one of the data interface(s), a data transmission unit (30, 30') for transmitting data via the air gap (6).

9. Control system having at least one terminal unit (130), a control unit (120), at least one field unit (150) and at least one device according to one of the preceding claims.

## Revendications

1. Dispositif pour la transmission d'énergie sans contact par induction d'une partie primaire (1) à une partie secondaire (1'), qui comportent chacune au moins un enroulement (10, 10'), qui peuvent être couplées l'une avec l'autre par induction à travers un entrefer (6), **caractérisé en ce que** la partie primaire (1) et/ou la partie secondaire (1') comportent au moins une installation d'acquisition de l'état (50, 50') pour l'acquisition d'une ou plusieurs grandeurs internes, incluant l'intensité/les intensités, la tension/les tensions, la température/les températures et/ou le rendement/les rendements, comme paramètres d'état de la partie primaire (1) et/ou de la partie secondaire (1') et **en ce que** l'au moins une installation d'acquisition de l'état (50, 50') comporte une unité de paramétrage avec laquelle une ou plusieurs valeurs limites de certains ou plusieurs des paramètres d'état peuvent être réglées et/ou modifiées, le dispositif de transmission de données (40) de la partie primaire (1) étant conçu pour la transmission de données sur au moins un bus de données ou plusieurs bus de données vers un appareil de commande (passerelle 120) ou directement vers un terminal (130), le dispositif étant en outre couplé à l'au moins un terminal (130), directement ou par l'intermédiaire de l'appareil de commande (120), pour l'entrée et la sortie de données, c'est-à-dire l'affichage de données, et l'au moins un terminal (130) présentant une interface graphique qui est conçue pour l'affichage visuel d'un ou plusieurs des paramètres d'état et pour le réglage ou la modification des une ou plusieurs valeurs limites pour un à la fois ou plusieurs des paramètres d'état d'intensité/intensités, tension/tensions, température/températures et/ou rendement/rendements.

2. Dispositif selon la revendication 1, **caractérisé en ce que** l'installation d'acquisition de l'état (50) de la partie primaire (1) est couplée à un dispositif de transmission de données (40) de la partie primaire (1) et/ou **en ce que** l'installation d'acquisition de l'état (50') de la partie secondaire (1') est couplée à un dispositif de transmission de données (40') de la partie secondaire (1').

3. Dispositif selon la revendication 1 ou 2, **caractérisé en ce que** l'installation d'acquisition de l'état (50) de la partie primaire (1) est couplée avec un ou plusieurs capteurs (S1, S2, ..., SN) pour l'acquisition d'un ou plusieurs paramètres d'état sur la partie primaire, en particulier sur l'enroulement primaire (10), et/ou **en ce que** l'installation d'acquisition de l'état (50') de la partie secondaire (1') est couplée avec un ou plusieurs capteurs (S1', S2', ..., SN') pour l'acquisition d'un ou plusieurs paramètres d'état sur la partie secondaire (1'), en particulier sur l'enroulement secondaire (10').

4. Dispositif selon l'une des revendications précédentes, **caractérisé en ce que** le dispositif de transmission de données (40) de la partie primaire (1) est en outre conçu pour la transmission de données sur au moins un bus de données vers le dispositif de transmission de données de la partie secondaire (1').

5. Dispositif selon l'une des revendications précédentes, **caractérisé en ce que** le dispositif de transmission de données (40) de la partie secondaire (1') est conçu pour la transmission de données sur au moins un bus de données ou sur plusieurs bus de données vers au moins un appareil de terrain (150).

6. Dispositif selon l'une des revendications précédentes, **caractérisé en ce qu'**il comporte une adresse d'identification pour l'identification et l'adressage du dispositif dans un système de commande.

7. Dispositif selon l'une des revendications précédentes, **caractérisé en ce que** le dispositif de transmission de données (40, 40') respectif de la partie primaire (1) et/ou de la partie secondaire (1') destiné à la transmission des paramètres d'état déterminés sur un bus de données séparé est conçu exclusivement pour la transmission de ces valeurs.

8. Dispositif selon l'une des revendications précédentes, **caractérisé en ce que** les dispositifs de transmission de données (40, 40') sont conçus pour la transmission de données via l'entrefer (6) et **en ce que**, à cette fin, la partie primaire (1) et la partie secondaire (1') présentent chacune, comme l'interface ou une des interfaces de données, une unité de transmission de données (30, 30') pour la transmission de données via l'entrefer (6).

9. Système de commande comportant au moins un terminal (130), un appareil de commande (120), au moins un appareil de terrain (150) et au moins un dispositif selon l'une des revendications précédentes.
